(19) Europäisches Patentamt
European Patent Office
Office européen des brevets

(11) Publication number : **0 250 446 B1**

# (12) EUROPEAN PATENT SPECIFICATION

(45) Date of publication of patent specification : **28.03.90**

(51) Int. Cl.$^5$ : **C 23 F 11/167**, C 11 B 5/00, C 07 F 9/38

(21) Application number : **86905391.8**

(22) Date of filing : **16.09.86**

(86) International application number : **PCT/IT 86/00069**

(87) International publication number : **WO/87027 (07.05.87 Gazettee 87/10)**

## (54) PROCESS FOR THE PRESERVATION OF ORGANIC PRODUCTS.

(30) Priority : **28.10.85 IT 2263085**

(43) Date of publication of application : **07.01.88 Bulletin 88/01**

(45) Publication of the grant of the patent : **28.03.90 Bulletin 90/13**

(84) Designated contracting states : **BE DE FR GB NL**

(56) References cited :
**FR-A- 1 327 618**
**FR-A- 1 327 619**
**GB-A- 748 137**
**US-A- 3 630 790**
**Soviet Inventions Illustrated, Derwent Publications Ltd. Section Chemical Week E41, 24 November 1982 see abstract 87401**
**The file contains technical information submitted after the application was filed and not included in this specification**

(73) Proprietor : **GIOVANNI BOZZETTO S.P.A.**
**Via Provenciale 12**
**I-24040 Filago (IT)**

(72) Inventor : **PALADINI, Massimo**
**Via Ghislanzoni, 37**
**I-24100 Bergamo (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 250 446 B1**

Jouve, 18, rue St-Denis, 75001 Paris, France

## Description

It is well known that, for the preservation and storage of corrosive aqueous solutions, additives are used in order to avoid corrosion of the containers and to limit the preserved products becoming coloured due to the formation of salts or metal compounds at the expense of the material of which the container itself is made.

The problem of corrosion still however exists when organic products in a non-aqueous phase have to be stored.

Storage of certain natural or synthetic organic products, such as, for example, oils and fatty acids of animal or vegetable origin monomers or polymers having free acid groups which can release acid groups by hydrolysis, gives rise to considerable problems of corrosion that may be prejudicial to their quality, together with phenomena of polymerization or metal catalyzed oxydation due to the presence of oxygen in the air.

Subject invention removes the above drawbacks at the same time providing important advantages as will be described below.

Subject of the invention is a process for the preservation of organic products possessing corrosive properties, by the use of certain phosphonic compounds.

In particular, compounds are used as anticorrosive agents, corresponding to the formula

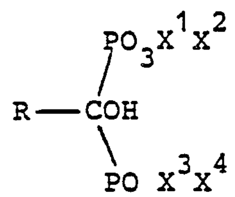

where R is a linear or branched alkyl or aryl-alkyl radical having a number of carbon atoms from 8 to 22 and $X^1$, $X^2$, $X^3$, $X^4$, are equal or different: hydrogen $NH_4^+$ substituted cycloalkyl- or alkyl-aryl, aryl, alkyl quaternary ammonium radical, a metal belonging to group 1-4.

The above compounds inhibit corrosion of the metallic materials of the containers by the organic products stored inside them in a non-aqueous phase. Further, while such compounds exercize a marked anticorrosion action if they are used in the storage of organic products having corrosive properties, actually they show no effect if used in the storage of aqueous solutions.

They also show great ability to form complex ions of transition metal in the organic phases and, by a variation in oxido-reduction potential as well, they ensure a notable degree of inhibition of phenomena of degradation relating to oxidation or polymerization due to the oxygen in the air.

In particular the compounds concerned can be diphosphonic hydroxy derivates of caprylic, lauric, palmitic, stearic, undecenoic, oleic, cyclohexanecarboxylic acids.

The methods followed in preparing the compounds corresponding to the above formula have been well known for some time and are based on the reaction of anhydrous phosphorous acid with the anhydrides or chlorides of carboxylic acids or on the interaction of phosphorus trichloride with the organic acids.

According to the process subject of the invention such compounds are prepared to obtain the maximum concentration of diphosphonate products keeping the level of secondary compounds and, above all, of inorganic acids very low, in order to ensure the highest anticorrosion effect and the best binding ability on transition metal ions.

Reaction between the organic component, namely the aliphatic acid or its anhydride and the chloride, and the inorganic component, namely the phosphorus trichloride or the phosphorous acid, takes place with an excess of the organic component and under strictly controlled temperatures and time of reaction.

The reaction is carried out in such a way that all the inorganic reagent reacts and the quantity of nonvolatile inorganic components is reduced to the minimum.

The above compounds are used just as they are obtained and may be added directly to the product to be stored, since they are perfectly soluble in the organic phase, or else, even better, they are added in the form of a suitably concentrated solution, using as a solvent the same organic substances to be treated or any other kind of suitable solvent for the purpose.

Concentrations used depend to a great extent on the physical and chemical characteristics of the organic products to be protected, and especially on the acidity of the compound, on storage temperature and, of course, on length of storage.

Concentrations in active substance range from 100 to 1 500 p.p.m. (parts per million).

The above compounds can be used as filming agents in all operations connected with pickling and protection of iron metal surfaces, in such a way that they act as corrosion inhibitors.

Further, for the purposes of stabilizing organic products, they also constitute an alternative as

previously described provided they are modified depending on physico-chemical characteristics of organic products to be protected, temperature and storage time.

The protective film can be made through treatment of surfaces with solution of the subject compounds in suitable solvents (whether volatile or not) in accordance with the usual procedures (immersion, spraying or some other), especially using solutions at concentrations between 0.5 and 10 %.

The characteristics and purposes of the invention will be made even clearer by the following examples of its execution assisted by charts and graphs.

Example 1

In an inert atmosphere with three moles of caprylic acid, one mole of phosphorous trichloride is added gradually, keeping the temperature at 60 °C.

The reaction mass is then raised to 70 °C continually stirring the product for two hours.

The temperature is then slowly raised over a period of 4 hours up to 130 °C, removing the HCl which develops.

The temperature is maintained for another 4 hours, after which the volatile components are distilled from the reaction mass under a 1 mmHg vacuum up to a temperature of 160 °C. In this way a brown product is obtained which is dissolved in 2 parts of toluene and purified, washing with a saturated aqueous solution of NaCl.

The aqueous phase is analyzed in order to measure its content of inorganic P. The organic phase is used as reported in the following examples.

Analytic results show a content of inorganic phosphorus equivalent to 6.5 % of the phosphorus added in the reaction.

Example 2

3 moles of laurylchloride are added dropwise in 2 hours to 2 moles of $H_3PO_3$ kept at constant temperature of 130 °C, which is rapidly stirred, and the temperature is then gradually raised to 150 °C and kept at this level for 4 hours, removing the gases developing under reduced pressure and thinned down. The mass is then cooled down to 80 °C and 2 moles of $H_2O$ are added dropwise keeping the temperature at 80/90 °C.

The product is then cooled and a white mass obtained. A portion of said mass is subjected to purification as described in Example 1.

Analytical analysis shows inorganic P content equal to 1.7 % of the total phosphorus added in the reaction.

Example 3

3 glass test tubes A, B, C are set up open, each containing 6 g of fatty acids from mixed seeds.

Laurylhydroxydiphosphonic acid is added to two of said test tubes, B and C, so that they respectively contain 800 and 1 600 p.p.m. of phosphonate.

A steel lamina, surface area 8.4 $cm^2$ is completely immersed, after suitable pickling and drying, in each of the 3 test tubes and said test tubes are placed in a air-forced oven at 85 °C.

Every 12 hours small quantities of fatty acids are drawn off and analysed to check Fe content.

The results, given in the following table, show Fe content in p.p.m. of test tubes A, B, C, after respectively 12, 24 and 36 hours.

| | 12 h. | 24 h. | 36 h. |
|---|---|---|---|
| A) (without phosphonate) | 13.7 | 45.2 | 104.4 |
| B) (800 p.p.m. of phosphonate) | 6.5 | 7.0 | 21.1 |
| C) (1600 " " " ) | 7.9 | 10.7 | 12.5 |

Example 4

Four 800 cc. beakers are filled with 500 g of olive fatty acids originally containing 0.4 p.p.m. Fe.

3 steel laminas, surface area 80 $cm^2$, treated as in Example 3, are also prepared.

Suitable additions of diphosphonic oleylhydroxy acid are made to two beakers so as to obtain concentrations of 100 and 800 p.p.m. of phosphonate in the acid.

The 4 samples thus obtained called A), B), C), D), are the following :

A) (blank) without phosphonate or an Fe lamina in it ;

B) without phosphonate and with Fe lamina ;

C) containing 100 p.p.m. of oleylphosphonate and with Fe lamina ;
D) containing 800 p.p.m. of oleylphosphonate and with Fe lamina ;

The samples are placed in an air-forced oven at 85 °C for 96 hours. They are then analysed to check Fe content and Lovibond colour grade.

Results are given in the following table.

| | p.p.m. Fe | Lovibond |
|---|---|---|
| A . . . . . . . . . | 0.4 | 4 |
| B . . . . . . . . . | 60.4 | 6 |
| C . . . . . . . . . | 7.3 | 4/5 |
| D . . . . . . . . . | 4.6 | 4 |

Example 5

Following the methods used in the previous examples, and using 2 steel laminas, surface area 50 cm$^2$, 3 samples called A, B, C of 200 g of olive fatty acids are prepared as follows.

A) (blank) olive acids without phosphonate and Fe lamina ;
B) olive acids, without phosphonate, with Fe lamina ;
C) olive acids + 800 p.p.m. laurylhydroxydiphosphonic acid and Fe lamina.

The samples are placed in an air-forced oven at 85 °C. Over time small quantities of solution are drawn off and analysed to check Fe content and colour.

The results of colorimetric analyses on the three samples A, B, C are shown in the following graph with colour gradings on one axis and times on the other.

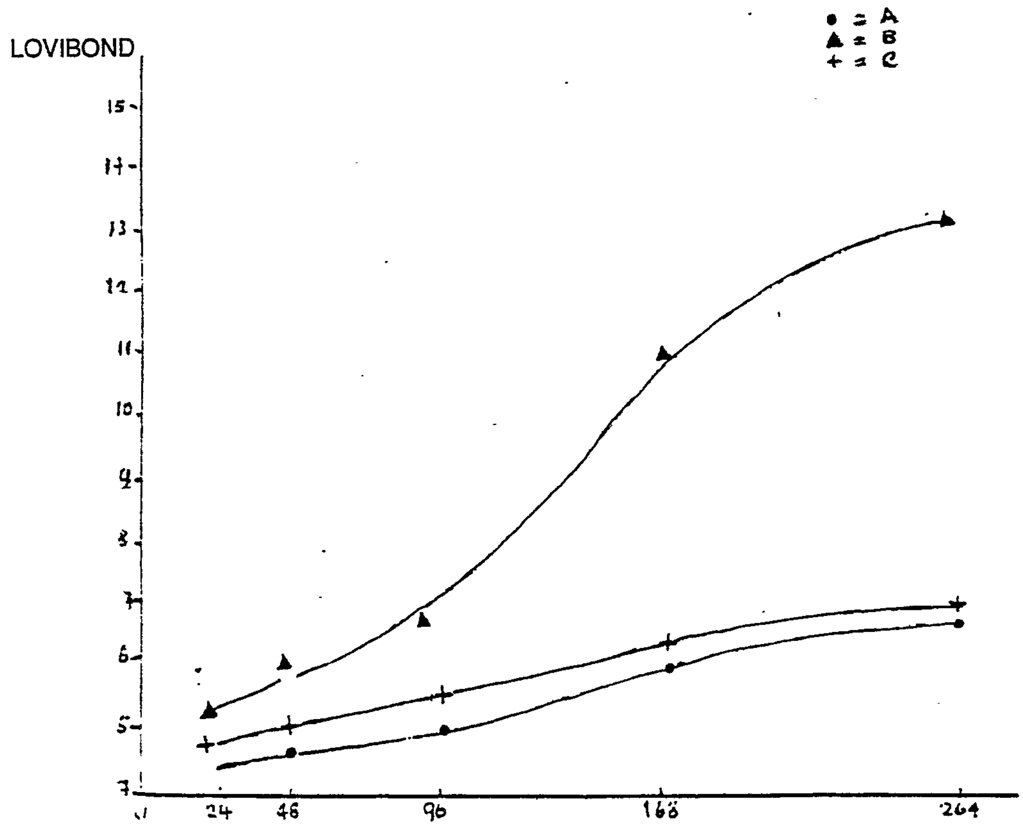


Concentrations of Fe ion p.p.m. determined at the various times, are listed below.

| | 96 h. | 168 h. | 264 h. |
|---|---|---|---|
| B) | 73.5 | 144 | 249 |
| C) | 2.3 | 2.5 | 2.5 |

Example 6

An iron lamina, total surface area 50 $cm^2$, pickled as in Example 3, is immersed for half an hour in a toluene solution at 1 % of lauroyldiphosphonic acid.

It is then dried at room conditions.

After drying the lamina is completely immersed in a beaker containing 200 g of olive fatty acids.

The beaker is placed in an air-forced oven at 85 °C for 268 hours ; at the end of the test, analysis shows Fe ion content of 1 p.p.

Example 7

Two steel lamina are prepared with ground wires, and then pickled by the usual method.

With these laminas two tests, A and B, are set up with olive fatty acids as follows :

A) olive fatty acid, without phosphonate, with steel lamina

B) olive fatty acid, 800 p.p.m. of laurylhydroxydiphosphonic acid, with lamina, lamina surface being 34 $cm^2$.

Grounding connections are set up and the beakers are placed in an air-forced oven at 85 °C.

After 268 hours, sample A contains 213.5 p.p.m. of Fe, while sample B contains 7.3 p.p.m.

## Claims

1. Process for the preservation of organic products having corrosive properties which comprises admixing to said organic products phosphonic derivates used as anticorrosive agents of the general formula

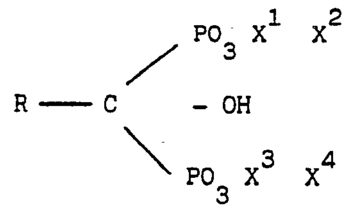

where R is a linear or branched alkyl or aryl-alkyl radical having a number of carbon atoms from 8 to 22, and $X^1$, $X^2$, $X^3$, $X^4$, are equal or different : a hydrogen, $NH_4^+$, a substituted cycloalkyl or alkyl-aryl, aryl, alkyl quaternary ammonium radical, a metal belonging to group 1-4.

2. Process as in claim 1 wherein said compounds are added to the organic products to be preserved so as to obtain concentrations 100 to 1 500 p.p.m.

3. Process as in claim 1 wherein said compounds are used as an anticorrosive film on the inside surfaces of containers.

4. Process as in claim 1 wherein said compounds are used as colour stabilizers.

5. Process as in claim 1 wherein said compounds are chosen from among the hydroxydiphosphonic derivates of caprylic, lauric, palmitic, stearic, undecenoic, oleic, ciclohexanecarboxylic acids.

## Patentansprüche

1. Prozess für den Schutz von organischen Produkten die korrosive Eigenschaften haben, dergestalt, dass als antikorrosive Produkte zu den genannten organischen Produkten Phosphonsäurederivate zugemischt werden, welche die allgemeine Formel haben :

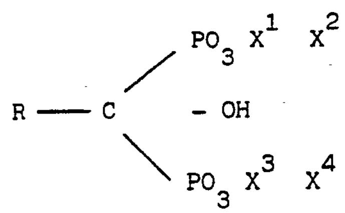

wobei R ein lineares oder verzweigtes Alkyl- oder Aryl-Alkyl-Radikal mit 8-22 Kohlenstoffatomen ist und $X^1$, $X^2$, $X^3$, $X^4$ gleich oder unterschiedlich sind, ein Wasserstoff-, $NH_4^-$, ein substituiertes Cycloalkyl- oder Alkyl-Aryl-, Aryl oder ein quaternäres Alkylammonium-Radikal, ein Metall, welches zu den Gruppen 1-4 gehört.

2. Prozess wie in Anspruch 1 wonach die genannten Verbindungen den organischen Produkten, die geschützt werden sollen, in Mengen von 100-1 500 ppm zugesetzt werden.

3. Prozess wie in Anspruch 1 wonach die genannten Verbindungen als antikorrosiver Film auf der inneren Oberfläche von Behältern verwendet werden.

4. Prozess wie in Anspruch 1 wonach die genannten Verbindungen als Farbstabilisatoren verwendet werden.

5. Prozess wie in Anspruch 1 wonach die genannten Verbindungen aus den Hydroxydiphosphonsäure-Derivaten der Capryl-, Laurin, Palamitin-, Stearin-, Undecan-, Öl-, Cyclohexan-Carbonsäure ausgewählt werden.

**Revendications**

1. Procédé pour la préservation de produits organiques ayant propriétés corrosives caractérisé en ce qu'on utilise, dans ces produits, de dérivés phosphoniques employés comme agents anticorrosifs de formule générale

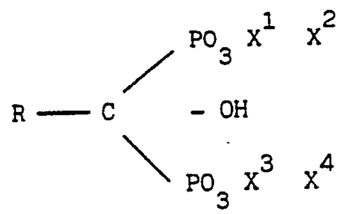

où R est un radical alkyle ou aryl-alkyle linéaire ou ramifié ayant un numéro d'atomes de carbone de 8 à 22, et $X^1$, $X^2$, $X^3$, $X^4$, sont semblables ou différents : un hydrogène, $NH_4^+$, un radical ammonium quaternaire alkyle, aryl, alkyle-aryl ou cycloalkyle substitué, un métal appartenant au groupe 1-4.

2. Procédé suivant la revendication 1, caractérisé en ce qu'on ajoute ces composés aux produits organiques à préserver, afin d'obtenir des concentrations de 100 à 1 500 ppm.

3. Procédé suivant la revendication 1, caractérisé en ce qu'on emploie ces composés comme un film anticorrosif sur les surfaces intérieures des réservoirs.

4. Procédé suivant la revendication 1, caractérisé en ce qu'on emploie ces composés comme stabilisants de couleur.

5. Procédé suivant la revendication 1, caractérisé en ce qu'on choisit ces composés parmi les dérivés hydroxydiphosphoniques des acides capryliques, lauriques, palmitiques, stéariques, undécénoïques, oléiques, cyclohexanecarboxyliques.